# EUROPEAN PATENT APPLICATION

(11) **EP 1 233 557 A1**
(43) Date of publication of application: **21.08.2002**
(21) Application number: 01958542.1
(22) Date of filing: 28.08.2001
(51) Int. Cl.: H04J 1/00

(54) **MULTICARRIER TRANSMITTER AND MULTICARRIER TRANSMISSION METHOD**

(30) Priority: 31.08.2000 JP 2000264195
(71) Applicant: MATSUSHITA ELECTRIC INDUSTRIAL CO., LTD., Kadoma-shi, Osaka 571-8501 (JP)
(72) Inventor: SUMASU, Atsushi, Yokosuka-shi, Kanagawa 238-0013 (JP); SUDO, Hiroaki, Yokosuka-shi, Kanagawa 224-0054 (JP)
(74) Representative: Grünecker, Kinkeldey, Stockmair & Schwanhäusser Anwaltssozietät
(86) International application number: JP0107346
(87) International publication number: WO02019583

(57) **Abstract**

OFDM modulation of a transmission data is performed in an IDFT section 103 to generate an OFDM signal; it is determined whether a multicarrier signal generated in a peak detecting circuit 106 is required to be suppressed; the multicarrier signal which is determined to be required for suppression is equally suppressed in an equally-suppressing circuit 107; and peak voltage is suppressed by clipping a peak voltage part in a clipping circuit 108.

## Description

### Technical Field

The present invention relates to a multicarrier transmission apparatus and a multicarrier transmission method.

### Background Art

In the case of radio communication at a high transmission rate, the signal reception quality deteriorates as the larger influence due to multipath delay waves is caused along with the shorter symbol duration. Multicarrier modulation is effective against deterioration in the signal reception quality caused by the multipath delay waves. As multicarrier modulation, there is an OFDM (Orthogonal Frequency Division Multiplexing) modulation scheme that uses an IDFT (Inverse Discrete Fourier Transform) circuit to perform modulation collectively using a plurality of subcarriers orthogonal to each other to multiplex.

In some cases, peak voltage is generated in a multicarrier signal of the multicarrier modulation due to overlapping the phases of subcarriers. There has been a problem that a non-linear distortion is caused in a transmitting signal when the peak voltage exceeds a dynamic range of an analog circuit at a subsequent stage, consequently, an unwanted out-of-band emission is generated by the nonlinear distortion and interference is caused to other users and other systems. Moreover, there has been another problem that the error rate characteristics are deteriorated as long as a mutual interference is generated among subcarriers due to the non-linear distortion. In order to solve the above problems, there has been a technique known as clipping by which a peak-voltage generating portion of the multicarrier signal is suppressed.

However, a problem that a symbol error and mutual interference between each subcarrier is generated because the clipping is a non-linear signal conversion processing that generates the unwanted out-of-band emission.

A Means for solving the above problem has been disclosed in the Japanese patent application No. Hei -11 (1999) - 74862, entitled "An Apparatus for Multicarrier Signal Transmission". The invention disclosed in the Japanese patent application No. Hei -11 - 74862 has a configuration in which a maximum value of the multicarrier signal is detected every symbol and peak voltage is suppressed by equally suppressing the corresponding multicarrier signal including portions other than a maximum amplitude portion of the symbol according to the detected value. In such a processing, although the suppression processing is performed by multiplying the amplitudes by a constant, the deterioration in the error rate characteristics due to mutual interference does not occur and there is no unwanted out-of-band emission as the operation of the constant multiplication is a linear operation, therefore, mutual interference among carriers which is occurred when using the clipping technology is not occurred anymore.

However, in the technology by which the multicarrier signal is equally suppressed, there have been the following problems.

That is, since the power level of the multicarrier signal is completely reduced as the whole multicarrier signal is equally suppressed, the signal to noise ratio (SNR ratio) is decreased at the receiving side and the error rate characteristics are deteriorated when the multicarrier signal is transmitted after amplification using a predetermined amplification rate. Moreover, as an amplifier with a large amplification rate is used in order to prevent the reduction in the SNR ratio, the size of the apparatus is increased which leads to an increasing of the cost.

### Disclosure of Invention

The object of the present invention is to provide a multicarrier transmission apparatus by which unwanted out-of-band emission and deterioration in error rate characteristics, which are caused by non-linear distortion generated due to clipping of a multicarrier signal, may be reduced, and the peak voltage may be suppressed by reducing the deterioration in the error rate characteristics caused by an equally suppressing the multicarrier signal which leads to power level reduction.

The object is achieved by determining whether a multicarrier signal generated by the multicarrier modulation of a transmitting data is required to be suppressed, and by equally suppressing a whole multicarrier signal which is determined to be required for suppression, and at the same time, suppressing only a peak-voltage generating portion of the above multicarrier signal.

### Brief Description of Drawings

FIG. 1 is a block diagram showing a configuration of a multicarrier transmission apparatus according to Embodiment 1 of the present invention;
FIG. 2 is an explanatory graph illustrating a suppression processing of OFDM signals according to Embodiment 1 of the present invention;
FIG. 3 is a block diagram showing a configuration of a multicarrier transmission apparatus according to Embodiment 2 of the present invention; and
FIG. 4 is an explanatory graph illustrating a suppression processing of OFDM signals according to Embodiment 2 of the present invention.

### Best Mode for Carrying Out the Invention

The inventor(s) of the present invention (has)have noticed both a clipping technology and a technology which equally suppresses a whole multicarrier signal, as a technology for suppressing the peak voltage generated in the multicarrier signal, and have found that any of an unwanted out-of-band emission, non-linear distortion due to clipping that causes a deterioration in the error rate characteristics and deterioration of a SNR ratio that causes a deterioration in the error rate may be improved by such a technology. Accordingly, the present invention has been made.

That is, the substance of the present invention is to suppress the peak voltage to a desired value, and to prevent reduction in the SNR ratio by equally suppressing the multicarrier signal in which the peak voltage has been generated and, at the same time, by clipping a peak-voltage generating portion. Thereby, reduction in the unwanted out-of-band emission and improvement of the error rate characteristics may be simultaneously achieved.

Hereinafter, best modes for carrying out the present invention will be described in detail, referring to the drawings.

### (Embodiment 1)

In Embodiment 1, a case using OFDM modulation will be described as one example of multicarrier modulation.

A multicarrier transmission apparatus according to the present embodiment has a function by which an OFDM signal is equally suppressed ,then, a peak-voltage generating portion in which peak voltage has occurred is clipped.

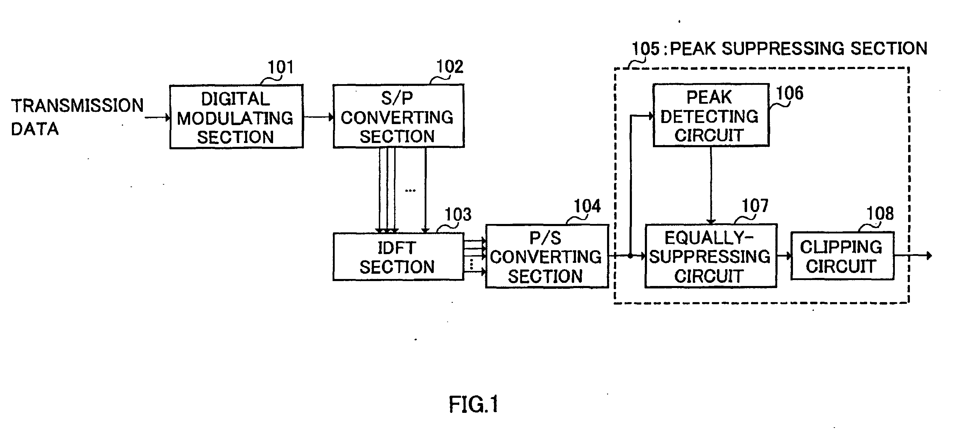

FIG. 1 is a block diagram showing a configuration of the multicarrier transmission apparatus according to Embodiment 1 of the present invention. According to the multicarrier transmission apparatus shown in FIG. 1, digital modulation of a transmission data is performed in digital modulating section 101; the modulated data is converted into a parallel signals in S/P (Serial/Parallel) converting section 102; IDFT (Inverse Discrete Fourier Transform) processing of the converted signal is executed in an IDFT section 103; the processed signals are converted into a serial signal (OFDM signal) in a P/S (Parallel/Serial) converting section 104; and suppression processing of the converted signal is performed in a peak suppressing section 105 to generate the transmission signal.

The peak suppressing section 105 has a configuration that comprising peak detecting circuit 106, equally-suppressing circuit 107 and clipping circuit 108. The peak suppressing section 105 has a function by which it is determined whether the OFDM signal inputted from the P/S converting section 104 is required to be suppressed; and, if required, the OFDM signal is equally suppressed, then, clipped to suppress the peak voltage.

In peak suppressing section 105, the peak detecting circuit 106 detects the maximum value of the power of the OFDM signal inputted from the P/S converting section 104 and performs a threshold determination process to determine whether the maximum value is required to be suppressed. That is, the suppression is required when the maximum value of the power of the OFDM signal (hereinafter, referred to as "signal maximum value") is larger than a maximum permissible power of a transmitting amplifier (not shown) of a subsequent stage and causes interference to other stations. On the other hand, the suppression is not required when the signal maximum value is smaller than the maximum permissible power. Therefore, whether the suppression is required is determined using a threshold that is determined by considering the maximum permissible power of the above transmitting amplifier and a power value causing interference to other stations. Here, the maximum value of the power of the OFDM signal of which suppression is determined to be required is referred to as peak voltage in the present description.

The equally-suppressing circuit 107 equally suppresses the OFDM signal by equal-suppression width based on the result of the threshold determination in peak detecting circuit 106. That is, the equally-suppressing circuit 107 equally suppresses the OFDM signal by a predetermined ratio using linear processing and the suppressed OFDM signal is outputted to clipping circuit 108 when it is determined by the peak detecting circuit 106 that the OFDM signal is required to be suppressed. Conversely, the OFDM signal is outputted to clipping circuit 108 with no suppression when it is determined by peak detecting circuit 106 that the OFDM signal is not required to be suppressed. Moreover, equally-suppressing means that the OFDM signal is equally suppressed by constant multiplication of the amplitudes of the whole OFDM signal including the peak-voltage generating portion. The clipping circuit 108 performs clipping processing by which the peak-voltage generating portion of the OFDM signal outputted from the equally-suppressing circuit 107 is suppressed, and outputs the processed signal.

Then, operations of the multicarrier transmission apparatus with the above configuration will be described.

Input transmission data are converted into parallel signals in the S/P converting section 102 after being digitally modulated in digital modulating section 101. Subsequently, the converted signals are converted into a series signal (OFDM signal) in P/S converting section 104 after being subjected to IDFT processing in IDFT section 103. Then, the converted signal is outputted as a transmitting signal after being subjected to suppression processing in the suppressing section 105. The output transmitting signal is transmitted through a not-shown antenna after orthogonal modulation.

Now, the operations in the peak suppressing section 105 will be described.

In the peak detecting circuit 106, the maximum value of the power of the OFDM signal inputted from P/S converting section 104 is detected, and the signal maximum value is subjected to the threshold determination in order to determine whether the OFDM signal is required to be suppressed. When it is determined in peak detecting circuit 106 that the OFDM signal is required to be suppressed, the equally-suppressing circuit 107 equally suppresses the OFDM signal and sends the suppressed signal to clipping circuit 108. As the equally-suppressing processing is linear processing, the waveform shape of the power-time relation becomes the same as that of the power-time relation before the suppression, and non-linear distortion is not generated in the waveform of the power of the OFDM signal. In clipping circuit 108, a portion which is larger than the threshold (peak-voltage generating portion) in the OFDM signal that is outputted from the equally-suppressing circuit 107 is clipped. The clipping is performed so that the unwanted out-of-band emission due to non-linear distortion becomes equal to or less than a permissible value. Further, when the threshold is determined based on the maximum permissible power of a transmission amplifier (not shown) at the subsequent stage and a power value causing interference to other stations, the OFDM signals are suppressed to a level equal to or less than the threshold, the distortion of the signals in the above transmitting amplifier may be suppressed, and the interference to other stations may be prevented.

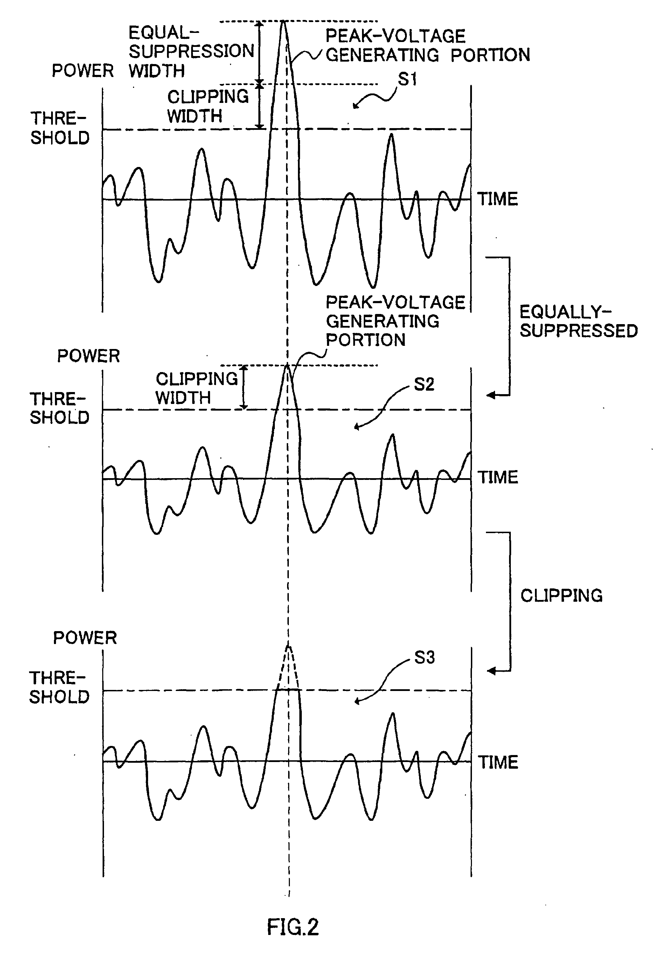

Then, the suppression processing of the OFDM signal will be described, referring to FIG. 2.

The peak voltage of the OFDM signal S1 which is outputted from the P/S converting section 104 is generated.

The OFDM signal S1 is equally suppressed by the equal-suppression width in the equally-suppressing circuit 107 to become an OFDM signal S2. The equal-suppression width is preset in the system so that the deterioration of the error rate characteristics is controlled within a permissible range in the system or service, considering that a signal level decreases in equally suppressing the signal and the error rate characteristics deteriorate..

The OFDM signal S2 becomes an OFDM signal S3 after suppressing the peak-voltage generating portion by a clipping width (subjected to clipping) in clipping circuit 108. The clipping width is preset in the system to be controlled within a permissible range in the system or service , considering that a non-linear distortion in an OFDM signal caused by the clipping results in out-of-band emission and mutual interference and thereby error rate characteristics deteriorate.

Thereby, the power of the OFDM signal S3 becomes smaller than the maximum permissible power of the transmitting amplifier because the OFDM signal S3 takes a value equal to or less than the threshold. Moreover, there is no interference to other stations occurred event when the OFDM signal is converted into a radio frequency for transmission.

The sum of the equal-suppression width and clipping width is equal to the difference between the peak voltage and threshold. Therefore, the equal-suppression width and clipping width are related to each other under a predetermined peak voltage such that, when one is increased the other is decreased, or when one is decreased the other is increased. Accordingly, favorable values may be set in the system or service as the equal-suppression width and clipping width considering the relation between them as well as individual elements in the above equal-suppression width and the above clipping width.

Thus, the deterioration in the error rate chracteristics caused by the distortion in the OFDM signal which are generated by clipping process, and the deterioration in the error rate characteristics caused by reduction in the power level in the case of equal suppression of the OFDM signal may be reduced according to the present embodiment firstly by the suppression of the OFDM signal, so that the peak voltage takes a value larger than the threshold by the clipping width, then, by clipping the part exceeding the threshold.

Moreover, a peak to average power ratio (PAPR) may be reduced in comparison with that of the conventional case in which only equal suppression is executed because the peak-voltage generating portion is suppressed by clipping process. Therefore, transmission amplification may be efficiently realized using an amplifier with a small dynamic range. Furthermore, reduction in the size of the amplifier may be realized and hence, the cost may be lowered as the transmission amplification may be realized using the amplifier with a small dynamic range.

### (Embodiment 2)

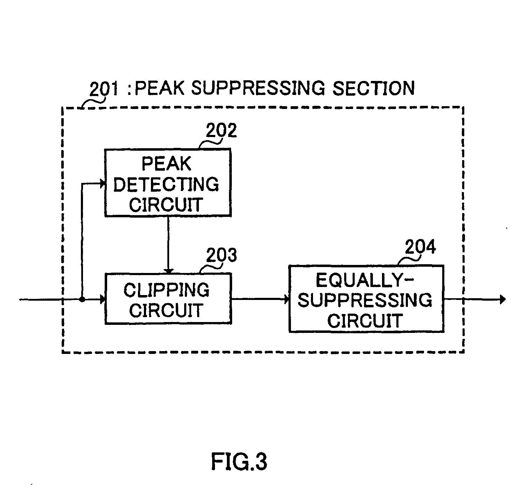

The present embodiment is an alternative one of Embodiment 1, and an embodiment in which an OFDM signal is clipped firstly, and the OFDM signal after clipping is equally suppressed. That is, the present embodiment is different from Embodiment 1 in the point that equal suppression is processed after the OFDM signal is subjected to clipping. Hereinafter, the multicarrier transmission apparatus according to the present embodiment will be described referring to FIG. 3. FIG. 3 is a block diagram showing a peak suppressing section of the multicarrier transmission apparatus according to Embodiment 2 of the present invention. In addition, the configuration excluding peak suppressing section shown in FIG. 3 is the same as that of the multicarrier transmission apparatus according to Embodiment 1 and the description thereof will be omitted.

A peak suppressing section 201 has a configuration in which peak detecting circuit 202,clipping circuit 203 and equally-suppressing circuit 204 are provided. The peak suppressing section 201 suppresses the OFDM signal so that non-linear distortion is generated in a transmitting amplifier and interference to other stations are reduced.

The peak detecting circuit 202 detects the maximum value of the power of the OFDM signal outputted from P/S converting section 104 and performs threshold determination process in order to determine whether the maximum value is required to be suppressed. The clipping circuit 203 performs clipping processing by which a peak-voltage generating portion of the OFDM signal inputted from P/S converting section 104 is suppressed by an initially set clipping width based on the result of the threshold determination in the peak detecting circuit 202, and the OFDM signal after being subjected to the clipping processing is inputted to the equally-suppressing circuit 204. The equally-suppressing circuit 204 equally suppresses the OFDM signal outputted from the clipping circuit 203 by an equal-suppression width.

Then, the operations in the peak suppressing section 201 with the above configuration will be described.

The peak detecting circuit 202 detects the maximum value of the power of the OFDM signal outputted from P/S converting section 104 and performs threshold determination process of the maximum value in order to determine whether the OFDM signal is required to be suppressed. In clipping circuit 203, the peak-voltage generating portion of the OFDM signal is suppressed by the clipping width when it is determined in the peak detecting circuit 202 that the OFDM signal is required to be suppressed. In the equally-suppressing circuit 204, the OFDM signal outputted from clipping circuit 203 is equally suppressed. Since the equally-suppressing processing is a linear processing of the whole OFDM signal in every predetermined segment, the non-linear distortion is not generated in the OFDM signal.

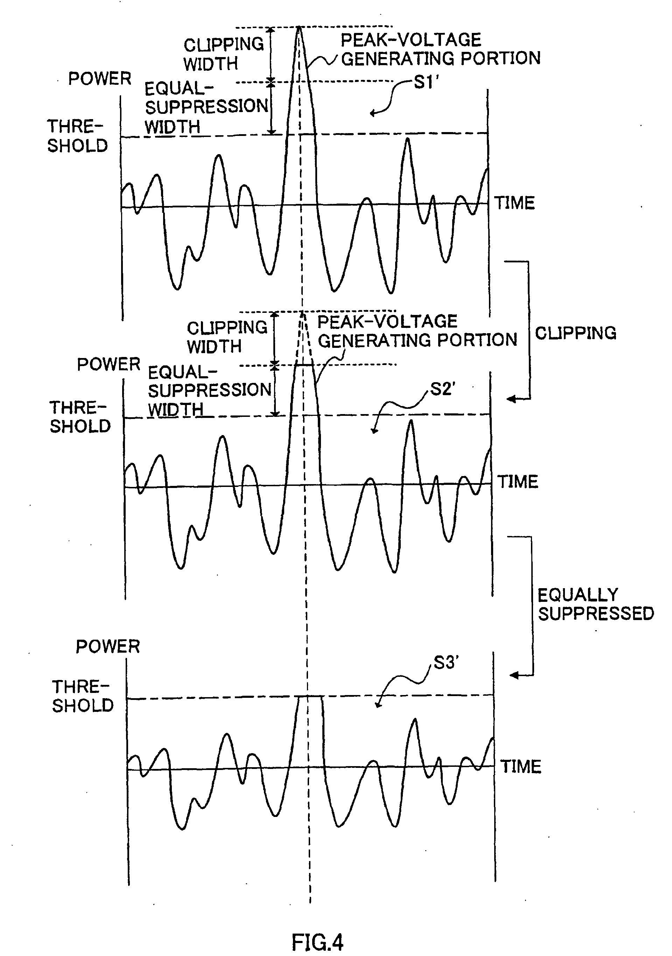

Now, suppression processing of the OFDM signal in the present embodiment will be described referring to FIG. 4.

Peak voltage of an OFDM signal S1' outputted from P/S converting section 104 has been generated. A peak voltage is generated in an OFDM signal S1 ' outputted from P/S converting section 104. The OFDM signal S1' becomes an OFDM signal S2' after suppressing the peak-voltage generating portion by a clipping width (subjected to clipping) in clipping circuit 203. The OFDM signal S2' becomes an OFDM signal S3' after being equally suppressed by the equal-suppression width in equally-suppressing circuit 204. Equally-suppressing in this case is a linear processing carried out by constant multiplication of the signal amplitude.

Moreover, the clipping width is initially set, so that the unwanted out-of-band emission or mutual interference is controlled to a value equal to or less than a predetermined value. On the other hand, the equal-suppression width in the equally-suppressing circuit 204 is set so that the maximum value of the signal after clipping becomes a value equal to or less than a threshold set in the peak detecting circuit 202.

As described above, the deterioration in the error rate characteristics due to distortion in the OFDM signal which is generated by clipping process, and the deterioration in the error rate characteristics due to reduction in the power level in the case of equal suppression of the OFDM signal may be reduced according to the present embodiment by firstly clipping the OFDM signal by the clipping width, then, by suppressing the signal so that the maximum value becomes smaller than the threshold.

The clipping width is initially set so that the unwanted out-of-band emission or mutual interference is adjusted to a value which is equal to or less than the predetermined value, and the equal-suppression width is set so that the maximum value of the signal after clipping becomes a value which is equal to or less than the threshold. Accordingly, the processing may be easily executed.

Moreover, a peak to average power ratio may be reduced in comparison with that of the conventional case in which only equal suppression is executed as the peak-voltage generating portion is suppressed by clipping. Therefore, transmission amplification may be efficiently realized using an amplifier with a small dynamic range. Furthermore, reduction in the size of the amplifier may be also realized, and hence, the cost may be lowered as the transmission amplification may be realized using the amplifier with a small dynamic range.

There is another method besides the clipping method as a method for suppressing a peak-voltage generating portion. In the another method, a weighting function is multiplied only by the peak-voltage generating portion in the vicinity of the peak-voltage generating portion. Since the unwanted out-of-band emission and mutual interference may be further reduced by using an appropriate weighting function in comparison with the case in which the clipping is used, the equal-suppression width may be further reduced and transmission may be more efficiently realized.

Here, the OFDM modulation method is applied as one example of the multicarrier modulation method in the above embodiments, but the present invention is not limited to the above method, and any multicarrier modulation methods may be applied.

As described above, the deterioration of the unwanted out-of-band emission and error rate characteristics which are caused by non-linear distortion generated when suppression of only the peak-voltage generating portion of the maulticarrier signal; and the deterioration in error rate characteristics which are caused by the reduction in the power level that is caused at equal suppression of the OFDM signal may be reduced according to the present invention.

The present description is based on the prior Japanese Patent Application 2000-264195, filed on August 31, 2000, entire content of which is incorporated by reference herein.

### Industrial Applicability

The present invention is applicable to a base station apparatus or a communication terminal apparatus in a digital mobile communication system using a multicarrier modulation method.

## Claims

1. A multicarrier transmission apparatus comprising:
generating means for generating a multicarrier signal by a multicarrier modulation of a transmitting data; and
suppressing means for equally suppressing a whole multicarrier signal of which a peak is generated and for suppressing only a peak-voltage generating portion of said multicarrier signal.

2. The multicarrier transmission apparatus according to claim 1, wherein
said suppressing means suppresses only said peak-voltage generating portion of said multicarrier signal and, thereafter, equally suppresses said whole multicarrier signal.

3. The multicarrier transmission apparatus according to claim 1, wherein
said suppressing means equally suppresses said whole multicarrier signal and, thereafter, suppresses only said peak-voltage generating portion of said multicarrier signal.

4. The base station apparatus comprising a multicarrier transmission apparatus according to claims 1 through 3.

5. The communication terminal apparatus comprising a multicarrier transmission apparatus according to claims 1 through 3.

6. A multicarrier transmission method comprising:
step of generating a multicarrier signal by a multicarrier modulation of a transmitting data;
step of determining whether said generated multicarrier signal is required to be suppressed; and
step of equally suppressing a whole multicarrier signal which is determined to be required for suppression and for suppressing peak voltage by suppressing only peak-voltage generating portion of said multicarrier signal.
